(19) Europäisches Patentamt / European Patent Office / Office européen des brevets

(11) **EP 3 729 719 B1**

## (12) FASCICULE DE BREVET EUROPEEN

(45) Date de publication et mention
de la délivrance du brevet:
**04.08.2021 Bulletin 2021/31**

(21) Numéro de dépôt: **18826391.7**

(22) Date de dépôt: **21.12.2018**

(51) Int Cl.:
*H04L 9/30* (2006.01)     *H04L 9/32* (2006.01)
*G06F 21/62* (2013.01)     *G06F 21/72* (2013.01)

(86) Numéro de dépôt international:
**PCT/EP2018/086769**

(87) Numéro de publication internationale:
**WO 2019/122416 (27.06.2019 Gazette 2019/26)**

(54) **PROCÉDÉ ET MODULE ÉLECTRONIQUE DE CALCUL D'UNE QUANTITÉ CRYPTOGRAPHIQUE, PROCÉDÉ ET DISPOSITIF ÉLECTRONIQUE DE TRAITEMENT D'UN MESSAGE ET PROGRAMME D'ORDINATEUR ASSOCIÉS**

ELEKTRONISCHES MODUL UND VERFAHREN ZUR BERECHNUNG EINER KRYPTOGRAPHISCHEN MENGE UND ZUGEHÖRIGE ELEKTRONISCHE VORRICHTUNG UND VERFAHREN ZUR VERARBEITUNG EINER NACHRICHT UND COMPUTERPROGRAMM

ELECTRONIC MODULE AND METHOD FOR CALCULATING A CRYPTOGRAPHIC QUANTITY, AND ASSOCIATED ELECTRONIC DEVICE AND METHOD FOR PROCESSING A MESSAGE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1701359**

(43) Date de publication de la demande:
**28.10.2020 Bulletin 2020/44**

(73) Titulaire: **THALES**
**92400 Courbevoie (FR)**

(72) Inventeurs:
• **MASSON, Simon**
**92622 GENNEVILLIERS (FR)**
• **BERNARD, Olivier**
**92622 GENNEVILLIERS CEDEX (FR)**
• **DUBOIS, Renaud**
**92622 GENNEVILLIERS CEDEX (FR)**
• **ORCIERE, Olivier**
**92622 GENNEVILLIERS (FR)**

(74) Mandataire: **Lavoix**
**2, place d'Estienne d'Orves**
**75441 Paris Cedex 09 (FR)**

(56) Documents cités:
• **PATRICK LONGA ET AL: "Efficient Techniques for High-Speed Elliptic Curve Cryptography", INTERNATIONAL ASSOCIATION FOR CRYPTOLOGIC RESEARCH,, vol. 20100527:030241, 27 mai 2010 (2010-05-27), pages 1-16, XP061004098,**
• **YONG WANG ET AL: "The Performance of Elliptic Curve Based Group Diffie-Hellman Protocols for Secure Group Communication over Ad Hoc Networks", COMMUNICATIONS, 2006. ICC '06. IEEE INTERNATIONAL CONFERENCE ON, IEEE, PI, 1 juin 2006 (2006-06-01), pages 2243-2248, XP031025398, ISBN: 978-1-4244-0354-7**
• **LANGLEY GOOGLE M HAMBURG RAMBUS CRYPTOGRAPHY RESEARCH S TURNER IECA A ET AL: "Elliptic Curves for Security; draft-irtf-cfrg-curves-06.txt", ELLIPTIC CURVES FOR SECURITY; DRAFT-IRTF-CFRG-CURVES-06.TXT; INTERNET-DRAFT: CFRG, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 6, 26 août 2015 (2015-08-26), pages 1-17, XP015124156,**

# EP 3 729 719 B1

**Description**

La présente invention concerne un procédé de calcul d'une quantité cryptographique relative à un message, le procédé étant mis en œuvre par un module électronique de calcul.

Le procédé de calcul comprend le calcul d'une quantité cryptographique relative au message via un algorithme cryptographique, l'algorithme cryptographique étant un algorithme à logarithme discret sur une courbe elliptique définie sur un groupe cyclique.

La présente invention concerne également un procédé de traitement d'un message, le procédé étant mis en œuvre par un dispositif électronique de traitement. Le procédé de traitement comprend l'acquisition du message ; le calcul d'une quantité cryptographique relative au message acquis via un tel procédé de calcul ; et la transmission, à destination d'un dispositif électronique récepteur, de la quantité cryptographique calculée.

La présente invention concerne aussi un programme d'ordinateur comportant des instructions logicielles qui, lorsqu'elles sont exécutées par un ordinateur, mettent en œuvre un tel procédé de calcul et/ou un tel procédé de traitement.

La présente invention concerne également un module électronique de calcul d'une quantité cryptographique relative à un message et un dispositif électronique de traitement d'un message comprenant un tel module de calcul.

La présente invention concerne le domaine de la cryptographie, notamment celui de la cryptographie asymétrique.

La cryptographie asymétrique permet de réaliser des protocoles d'échange de clés ou de signature électronique. Le chiffrement RSA (nommé par les initiales de ses trois inventeurs Ronald RIVEST, Adi SHAMIR et Leonard ADLEMAN) est un algorithme de cryptographie asymétrique qui est lent et gourmand en temps de calcul.

Notamment pour remédier à un tel inconvénient, les courbes elliptiques ont été développées pour les protocoles d'échange de données. De fait, les courbes elliptiques sont intéressantes pour la cryptographie par l'existence sur le groupe (

$$E\left(\mathbb{F}_p\right),$$

+) d'une loi d'addition et de multiplication par un scalaire k. La loi de multiplication par un scalaire k définit le problème dit du logarithme discret sur courbes elliptiques, consistant à retrouver le scalaire k à partir de deux points P et [k]P de la courbe elliptique. Ce problème est difficile d'un point de vue calculatoire, c'est-à-dire que sa résolution n'est pas polynomiale en la taille en bits des éléments.

Pour assurer que le problème soit effectivement difficile, il convient que la courbe elliptique considérée vérifie un certain nombre de critères de sûreté.

Une courbe elliptique est considérée comme sûre si la courbe est insensible à une attaque générique du type rho de Pollard, à une attaque de type transfert, aux attaques utilisant des endomorphismes issus de la multiplication complexe, à une attaque sur la courbe associée par le phénomène de retournement (aussi désigné par le terme anglais de « twist »). Une courbe elliptique est considérée comme rigide, si sa génération est complètement explicite et ne comporte aucune étape arbitraire.

Les articles suivants exposent de l'art antérieur concernant le calcul de courbes elliptiques:

P. Longa et al: "Efficient Techniques for High-Speed Elliptic Curve Cryptography";

Y. Wang et al: "The Performance of Elliptic Curve Based Group Diffie-Hellman Protocols for Secure Group Communication over Ad Hoc Networks";

A. Langley et al: "Elliptic Curves for Security", Request for Comments 7748, Internet Research Task Force (IRTF).

Toutefois, les courbes elliptiques sûres de l'état de la technique présentent un niveau de sécurité inférieur ou égal à 128 bits de sécurité.

Le but de l'invention est alors de proposer un procédé et un module de calcul d'une quantité cryptographique relative à un message, qui permettent d'améliorer le niveau de sécurité, tout en ayant un temps de calcul réduit.

A cet effet, l'invention a pour objet un procédé de calcul d'une quantité cryptographique relative à un message, le procédé étant mis en œuvre par un module électronique de calcul et comprenant :

- le calcul de la quantité cryptographique relative au message via un algorithme cryptographique, l'algorithme cryptographique étant un algorithme à logarithme discret sur une courbe elliptique définie sur un groupe cyclique, la courbe elliptique vérifiant l'équation suivante :

$$y^2 = x^3 + A.x + B \quad mod\ p$$

le groupe cyclique étant une extension de corps

$$E\left(\mathbb{F}_{p^2}\right)$$

de degré 2 du corps $\mathbb{F}_p$ avec p = $2^{255}$-19,

et les coefficient A et B vérifiant respectivement $A = \left(-30 + \frac{140}{11}.\sqrt{2}\right)$ et $B = \left(56 - \frac{560}{11}.\sqrt{2}\right),$ la courbe elliptique vérifiant alors l'équation suivante :

$$E\left(\mathbb{F}_{p^2}\right):\ y^2 = x^3 + \left(-30 + \frac{140}{11}.\sqrt{2}\right).x + \left(56 - \frac{560}{11}.\sqrt{2}\right) \quad mod\ p.$$

Avec le procédé de calcul selon l'invention, l'algorithme cryptographique permet alors d'obtenir, de par la courbe elliptique telle que définie ci-dessus, un niveau de sécurité égal à 254 bits de sécurité, généralement assimilé à un niveau de sécurité de 256 bits, puissance de 2 ($2^8$) très proche de 254, tout en conservant le temps de calcul réduit associé à une courbe elliptique.

Suivant d'autres aspects avantageux de l'invention, le procédé de calcul comprend une ou plusieurs des caractéristiques suivantes, prises isolément ou suivant toutes les combinaisons techniquement possibles :

- l'extension

$$E\left(\mathbb{F}_{p^2}\right)$$

de degré 2 du corps $\mathbb{F}_p$ est définie par le polynôme irréductible $x^2$ - 2, chaque élément l'extension

$$E\left(\mathbb{F}_{p^2}\right)$$

s'écrivant sous la forme $x + a.\ y,$ où a est une racine dudit polynôme ;
- l'extension

$$E\left(\mathbb{F}_{p^2}\right)$$

de degré 2 du corps $\mathbb{F}_p$ a un cardinal égal à 4.N, où N est un facteur premier ;
- la courbe elliptique possède des premier et deuxième endomorphismes distincts, pour l'obtention d'une décomposition GLV en dimension 4 ; et
- le premier endomorphisme vérifie l'équation suivante :

$$\psi = \left[\sqrt{2}\right]:\ (x,y) \longmapsto \left(\left(-\frac{x}{2} - \frac{C_{2,2}(70/99)}{x-4}\right)^p, \left(\frac{y}{\sqrt{-2}}\left(-\frac{1}{2} + \frac{C_{2,2}(70/99)}{(x-4)^2}\right)\right)^p\right).$$

L'invention a également pour objet un procédé de traitement d'un message, le procédé étant mis en œuvre par un dispositif électronique de traitement et comprenant :

- l'acquisition du message ;
- le calcul d'une quantité cryptographique relative au message acquis via un procédé de calcul tel que défini ci-dessus ; et
- la transmission, à destination d'un dispositif électronique récepteur, de la quantité cryptographique calculée.

Suivant un aspect avantageux de l'invention, le procédé de traitement comprend la caractéristique suivante :

- la quantité cryptographique calculée est une signature électronique du message ou le chiffré du message.

L'invention a également pour objet un programme d'ordinateur comportant des instructions logicielles qui, lorsqu'elles sont exécutées par un ordinateur, mettent en œuvre un procédé de calcul tel que défini ci-dessus et/ou un procédé de traitement tel que défini ci-dessus.

L'invention a également pour objet un module électronique de calcul d'une quantité cryptographique relative à un message, le module électronique de calcul étant configuré pour calculer la quantité cryptographique relative au message via un algorithme cryptographique, l'algorithme cryptographique étant un algorithme à logarithme discret sur une courbe elliptique définie sur un groupe cyclique, la courbe elliptique vérifiant l'équation suivante :

$$y^2 = x^3 + A.x + B \quad mod\ p$$

le groupe cyclique étant une extension de corps

$$E\left(\mathbb{F}_{p^2}\right)$$

de degré 2 du corps $\mathbb{F}_p$ avec p = $2^{255}$-19,

et les coefficient A et B étant respectivement égaux à $A = \left(-30 + \frac{140}{11}.\sqrt{2}\right)$ et B = $\left(56 - \frac{560}{11}.\sqrt{2}\right)$, la courbe elliptique vérifiant alors l'équation suivante :

$$E\left(\mathbb{F}_{p^2}\right):\ y^2 = x^3 + \left(-30 + \frac{140}{11}.\sqrt{2}\right).x + \left(56 - \frac{560}{11}.\sqrt{2}\right) \quad mod\ p.$$

L'invention a également pour objet un dispositif électronique de traitement d'un message, le dispositif comprenant :

- un module d'acquisition configuré pour acquérir un message ;
- un module de calcul configuré pour calculer une quantité cryptographique relative au message acquis, le module de calcul étant tel que défini ci-dessus ; et
- un module de transmission configuré pour transmettre, à destination d'un dispositif électronique récepteur, la quantité cryptographique calculée.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un dispositif électronique, selon l'invention, de traitement d'un message, le dispositif comprenant un module d'acquisition d'un message, un module de calcul d'une quantité cryptographique relative au message acquis, et un module de transmission de la quantité cryptographique calculée à destination d'un dispositif électronique récepteur ; et
- la figure 2 est un organigramme d'un procédé, selon l'invention, de traitement du message, le procédé étant mis en œuvre par le dispositif électronique de traitement de la figure 1.

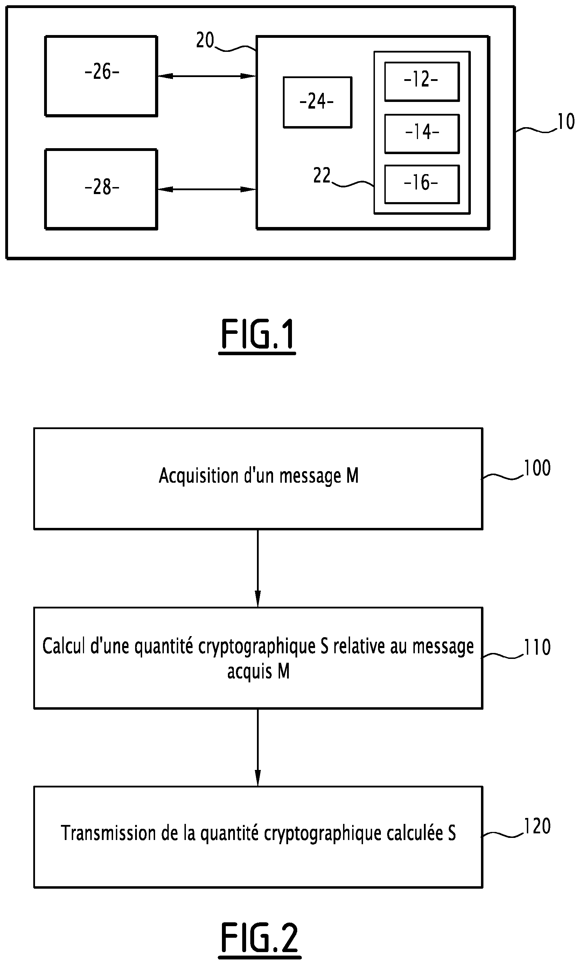

Sur la figure 1, un dispositif électronique de traitement 10 est configuré pour traiter un message M, et comprend un module d'acquisition 12 configuré pour acquérir le message M, un module de calcul 14 configuré pour calculer une quantité cryptographique S relative au message acquis M, et un module de transmission 16 configuré pour transmettre, à destination d'un dispositif électronique récepteur, non représenté, la quantité cryptographique calculée S.

Dans l'exemple de la figure 1, le dispositif électronique de traitement 10 comprend une unité de traitement d'informations 20 formée par exemple d'une mémoire 22 et d'un processeur 24 associé à la mémoire 22. Il comprend en outre dans cet exemple des moyens d'entrée/sortie 26 et éventuellement un écran d'affichage 28.

Dans l'exemple de la figure 1, le module d'acquisition 12, le module de calcul 14 et le module de transmission 16 sont réalisés chacun sous forme d'un logiciel exécutable par le processeur 24. La mémoire 22 de l'unité de traitement d'informations 20 est alors apte à stocker un logiciel d'acquisition configuré pour acquérir le message M, un logiciel de calcul configuré pour calculer la quantité cryptographique S relative au message acquis M et un logiciel de transmission configuré pour transmettre, à destination du dispositif électronique récepteur, la quantité cryptographique calculée S. Le processeur 24 de l'unité de traitement d'informations 20 est alors apte à exécuter le logiciel d'acquisition, le logiciel de calcul et le logiciel de transmission.

En variante non représentée, le module d'acquisition, le module de calcul et le module de transmission sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit).*

Le module d'acquisition 12 est configuré pour acquérir le message M, et est par exemple configuré pour recevoir le message M de la part des moyens d'entrée/sortie 26. Les moyens d'entrée/sortie 26 comportent par exemple un clavier ou encore un lecteur de support informatique. En variante, le module d'acquisition 12 est configuré pour acquérir le message M via un récepteur de données, apte à recevoir le message M de la part d'un autre équipement électronique, non représenté.

Le module électronique de calcul 14 est configuré pour calculer la quantité cryptographique S relative au message M via un algorithme cryptographique, l'algorithme cryptographique étant un algorithme à logarithme discret sur une courbe elliptique définie sur un groupe cyclique G.

La quantité cryptographique S calculée est une signature électronique du message M ou bien le chiffré du message M.

Le groupe cyclique G est une extension de corps

$$E\left(\mathbb{F}_{p^2}\right)$$

de degré 2 du corps $\mathbb{F}_p$ avec p = $2^{255}$-19, et la courbe elliptique vérifie l'équation suivante :

$$y^2 = x^3 + A.x + B \quad mod\ p \tag{1}$$

avec les coefficients A et B respectivement égaux à $A = \left(-30 + \frac{140}{11}.\sqrt{2}\right)$ et B = $\left(56 - \frac{560}{11}.\sqrt{2}\right).$

La courbe elliptique vérifie alors l'équation suivante :

$$E\left(\mathbb{F}_{p^2}\right): \ y^2 = x^3 + \left(-30 + \frac{140}{11}.\sqrt{2}\right).x + \left(56 - \frac{560}{11}.\sqrt{2}\right) \quad mod\ p \tag{2}$$

En complément facultatif, l'extension de degré 2 du corps est définie par le polynôme irréductible $x^2$ - 2, chaque élément l'extension

$$E\left(\mathbb{F}_{p^2}\right)$$

s'écrivant sous la forme *x + a. y,* où a est une racine dudit polynôme.

L'extension de degré 2 du corps a de préférence un cardinal égal à 4.N, où N est un facteur premier. N est par exemple un facteur premier de 508 bits. En utilisant le groupe G d'ordre N, la sécurité obtenue est alors de 254 bits.

Le cardinal de la forme 4.N permet aussi d'utiliser la courbe sous forme d'Edwards, ce qui permet d'obtenir une arithmétique plus efficace pour la loi de groupe de la courbe elliptique.

En complément facultatif, la courbe elliptique possède des premier $\psi$ et deuxième $\Psi$ endomorphismes distincts,

pour l'obtention d'une décomposition GLV (pour Gallant, Lambert et Vanstone) en dimension 4. Le principe de la décomposition GLV est connu en soi, et est par exemple décrit dans l'article « Faster point multiplication on elliptic curves with efficient endormorphisms » de Gallant et al, présenté lors de la 21ème conférence annuelle de cryptologie internationale à Santa Barbara en Californie en 2001.

Le premier endomorphisme $\psi$ est par exemple l'endomorphisme $[\sqrt{2}]$, et vérifie l'équation suivante :

$$\psi = [\sqrt{2}]: \quad (x,y) \longmapsto \left( \left( -\frac{x}{2} - \frac{C_{2,2}\left(\frac{70}{99}\right)}{x-4} \right)^p, \left( \frac{y}{\sqrt{-2}} \left( -\frac{1}{2} + \frac{C_{2,2}\left(\frac{70}{99}\right)}{(x-4)^2} \right) \right)^p \right) \tag{3}$$

Lorsque le premier endomorphisme $\psi$ est l'endomorphisme $[\sqrt{2}]$, le deuxième endomorphisme $\Psi$ associé audit premier endomorphisme $\psi$ pour l'obtention d'une décomposition GLV en dimension 4 est par exemple l'endomorphisme $[\sqrt{-11}]$.

L'obtention du deuxième endomorphisme $\Psi$ comprend, par exemple, les sous-étapes suivantes :

- le calcul d'un premier facteur irréductible du polynôme de division P11 qui permet de générer un sous-groupe d'ordre 11 du groupe de 11 torsion E[11] d'ordre 121 ;
- la construction d'un isomorphisme g à partir des formules de Vélu permettant d'expliciter une isogénie de degré 11 ; et
- la détermination de l'endomorphisme $[\sqrt{-11}]$ en appliquant le Frobenius à l'isomorphisme g.

Le polynôme de division P11, les formules de Vélu et le Frobenius sont bien connus de l'homme du métier.

En variante, le deuxième endomorphisme $\Psi$ est l'endomorphisme $[\sqrt{-22}]$ qui est par exemple obtenu à partir des formules de Stark.

En complément, pour effectuer la multiplication d'un point P par un scalaire k, le module de calcul 14 est configuré en outre pour décomposer le scalaire k en quatre éléments k1, k2, k3, k4, via la multiplication du vecteur (k, 0, 0, 0) par une matrice Q de décomposition de scalaire. La matrice Q est par exemple une matrice obtenue via l'algorithme LLL, connu en soi, pour décomposer les scalaires.

Le module 14 est ensuite configuré pour décomposer le point P en quatre points : P1, P2, P3 et P4, P1 étant le point P, P2 étant le résultat de l'application du premier endomorphisme $\psi$ au point P, P3 étant le résultat de l'application du deuxième endomorphisme $\Psi$ au point P et P4 étant le résultat de l'application du premier endomorphisme au point P3.

Le module de calcul 14 est enfin configuré pour appliquer une fonction de quadruple exponentiation simultanée aux points P1, P2, P, P4 avec les coefficients k1, k2, k3, k4.

La multiplication du point P par le scalaire k vérifie alors par exemple l'équation suivante :

$$kP = k1.P1 + k2.P2 + k3.P3 + k4.P4 \tag{4}$$

s'écrivant aussi sous la forme suivante :

$$kP = k1.P + k2.\psi(P) + k3.\Psi(P) + k4.\psi \circ \Psi(P) \tag{5}$$

Le module de transmission 16 est ensuite configuré pour transmettre la quantité cryptographique calculée S à destination du dispositif électronique récepteur, non représenté. Le module de transmission 16 est par exemple relié à un émetteur, tel qu'un émetteur radioélectrique, aux fins de cette transmission.

Le fonctionnement du dispositif électronique de traitement 10 selon l'invention va désormais être expliqué à l'aide de la figure 2 représentant un organigramme d'un procédé, selon l'invention, de traitement du message M.

Lors d'une étape initiale 100, le dispositif de traitement 10 acquiert, via son module d'acquisition 12, le message M, qui a été par exemple préalablement reçu via les moyens d'entrée/sortie 26.

Le dispositif de traitement 10 calcule ensuite, lors de l'étape 110 et via son module de calcul 14, la quantité cryptographique S relative au message acquis M.

La quantité cryptographique calculée S est une signature électronique du message M ou bien le chiffré dudit message M.

Le calcul de la quantité cryptographique S relative au message M est effectué via l'application de l'algorithme cryptographique qui est l'algorithme à logarithme discret sur la courbe elliptique définie sur le groupe cyclique G, la courbe elliptique vérifiant l'équation (2) précédente.

Pour effectuer la multiplication du point P par le scalaire k, le module de calcul 14 commence, par exemple, par décomposer le scalaire k en quatre éléments (k1, k2, k3, k4) via la multiplication du vecteur (k, 0, 0, 0) par la matrice de décomposition scalaire Q, puis décompose ensuite le point P en quatre points P1, P2, P3, P4 obtenus en utilisant les premier $\psi$ et deuxième $\Psi$ endomorphismes distincts, tels que décrits précédemment et associés à la courbe elliptique.

Le module de calcul 14 calcule ensuite le produit du point P par le scalaire k en faisant appel à la fonction de quadruple exponentiation simultanée, vérifiant par exemple l'équation (5) précédente.

Le dispositif de traitement 10 transmet enfin, lors de l'étape 120 et via son module de transmission 16, la quantité cryptographique S calculée lors de l'étape 110, au dispositif électronique récepteur, non représenté.

L'homme du métier comprendra alors que la courbe elliptique utilisée par le module de calcul 14 pour le calcul de la quantité cryptographique S, vérifiant l'équation (2), est particulièrement avantageuse.

En effet, cette courbe elliptique utilise une quadruple exponentiation pour un niveau de sécurité de 254 bits, généralement assimilé à un niveau de sécurité de 256 bits, puissance de 2 ($2^8$) très proche de 254, tout en utilisant comme corps de base le corps F255 - 19, qui est apte à être implémenté de manière très efficace et bien connu pour la cryptographie.

L'application de la décomposition GLV en dimension 4 sur cette courbe elliptique permet en outre de réduire de manière significative le temps de calcul de la quantité cryptographique S. L'application de la décomposition GLV en dimension 4 permet en effet un gain de temps d'environ 55% par rapport à l'algorithme DAA (de l'anglais *Double-And-Add*) et d'environ 24% par rapport à une décomposition GLV en dimension 2.

En outre, cette courbe elliptique est utilisable en conjonction avec une implémentation de la courbe Ed255-19 en réutilisant l'arithmétique du corps de base, ladite courbe Ed255-19 vérifiant par exemple l'équation suivante :

$$y^2 = x^3 + 486662.x^2 + x \qquad\qquad (6)$$

Un avantage supplémentaire de cette courbe elliptique est qu'elle admet une représentation d'Edwards twisté, ce qui permet d'accélérer encore les calculs.

On conçoit ainsi que le dispositif de traitement 10 selon l'invention et le procédé de traitement associé, permettent alors, de par le module de calcul 14 et le procédé associé de calcul de la quantité cryptographique S, d'améliorer le niveau de sécurité de la quantité cryptographique S calculée, tout en ayant un temps de calcul réduit.

L'homme du métier comprendra également que l'invention est particulièrement utile dans le domaine des systèmes de communication sécurisés, tels que les systèmes de radio-transmission sécurisés, les systèmes de téléphonie sécurisés, ou encore les systèmes de communication par satellite.

L'étendue de la protection est définie par les revendications.

## Revendications

1. Procédé de calcul d'une quantité cryptographique (S) relative à un message (M), le procédé étant mis en œuvre par un module électronique de calcul (14) et comprenant :

   - le calcul (110) de la quantité cryptographique (S) relative au message (M) via un algorithme cryptographique, l'algorithme cryptographique étant un algorithme à logarithme discret sur une courbe elliptique définie sur un groupe cyclique (G), la courbe elliptique vérifiant l'équation suivante :

$$y^2 = x^3 + A.x + B \quad mod\ p$$

   **caractérisé en ce que** le groupe cyclique (G) est une extension de corps

$$(E(\mathbb{F}_{p^2}))$$

de degré 2 du corps ($\mathbb{F}_p$) avec p = $2^{255}$-19,

et **en ce que** les coefficient A et B vérifient respectivement $A = \left(-30 + \frac{140}{11}.\sqrt{2}\right)$ et

$B = \left(56 - \frac{560}{11}.\sqrt{2}\right),$ la courbe elliptique vérifiant alors l'équation suivante :

$$E\left(\mathbb{F}_{p^2}\right): \ y^2 = x^3 + \left(-30 + \frac{140}{11}.\sqrt{2}\right).x + \left(56 - \frac{560}{11}.\sqrt{2}\right) \quad mod \ p.$$

2. Procédé de calcul selon la revendication 1, dans lequel l'extension

$$\left(E\left(\mathbb{F}_{p^2}\right)\right)$$

de degré 2 du corps ($\mathbb{F}_p$) est définie par le polynôme irréductible $x^2$ - 2, chaque élément l'extension

$$\left(E\left(\mathbb{F}_{p^2}\right)\right)$$

s'écrivant sous la forme $x + a. y,$ où a est une racine dudit polynôme.

3. Procédé de calcul selon la revendication 1 ou 2, dans lequel l'extension

$$\left(E\left(\mathbb{F}_{p^2}\right)\right)$$

de degré 2 du corps ($\mathbb{F}_p$) a un cardinal égal à 4.N, où N est un facteur premier.

4. Procédé de calcul selon l'une quelconque des revendications précédentes, dans lequel la courbe elliptique possède des premier ($\psi$) et deuxième ($\Psi$) endomorphismes distincts, pour l'obtention d'une décomposition GLV en dimension 4.

5. Procédé de calcul selon la revendication 4, dans lequel le premier endomorphisme ($\psi$) vérifie l'équation suivante :

$$\psi = \left[\sqrt{2}\right]: \ (x,y) \longmapsto \left(\left(-\frac{x}{2} - \frac{C_{2,2}(70/99)}{x-4}\right)^p, \left(\frac{y}{\sqrt{-2}}\left(-\frac{1}{2} + \frac{C_{2,2}(70/99)}{(x-4)^2}\right)\right)^p\right).$$

6. Procédé de traitement d'un message (M), le procédé étant mis en œuvre par un dispositif électronique de traitement (10) et comprenant :

   - l'acquisition (100) du message (M) ;
   - le calcul (110) d'une quantité cryptographique (S) relative au message acquis (M) via un procédé de calcul selon l'une quelconque des revendications précédentes ; et
   - la transmission (120), à destination d'un dispositif électronique récepteur, de la quantité cryptographique calculée (S).

7. Procédé de traitement selon la revendication 6, dans lequel la quantité cryptographique (S) calculée est une signature électronique du message (M) ou le chiffré du message (M).

8. Programme d'ordinateur comportant des instructions logicielles qui, lorsqu'elles sont exécutées par un ordinateur, mettent en œuvre un procédé selon l'une quelconque des revendications précédentes.

9. Module électronique (14) de calcul d'une quantité cryptographique (S) relative à un message (M), le module électronique de calcul étant configuré pour calculer la quantité cryptographique (S) relative au message (M) via un algorithme cryptographique, l'algorithme cryptographique étant un algorithme à logarithme discret sur une courbe elliptique définie sur un groupe cyclique (G), la courbe elliptique vérifiant l'équation suivante :

$$y^2 = x^3 + A.x + B \quad mod \; p$$

**caractérisé en ce que** le groupe cyclique (G) est une extension de corps

$$\left(E\left(\mathbb{F}_{p^2}\right)\right)$$

de degré 2 du corps ($\mathbb{F}_p$) avec p = 2²⁵⁵-19,

et **en ce que** les coefficient A et B sont respectivement égaux à $A = (-30 + \frac{140}{11}.\sqrt{2})$ et $B = \left(56 - \frac{560}{11}.\sqrt{2}\right)$, la courbe elliptique vérifiant alors l'équation suivante :

$$E\left(\mathbb{F}_{p^2}\right): \; y^2 = x^3 + \left(-30 + \frac{140}{11}.\sqrt{2}\right).x + \left(56 - \frac{560}{11}.\sqrt{2}\right) \quad mod \; p.$$

10. Dispositif électronique (10) de traitement d'un message (M), le dispositif (10) comprenant :

- un module d'acquisition (12) configuré pour acquérir un message (M) ;
- un module de calcul (14) configuré pour calculer une quantité cryptographique (S) relative au message acquis (M) ;
- un module de transmission (16) configuré pour transmettre, à destination d'un dispositif électronique récepteur, la quantité cryptographique calculée (S),
**caractérisé en ce que** le module de calcul (14) est selon la revendication précédente.

**Patentansprüche**

1. Verfahren zur Berechnung einer kryptographischen Größe (S) bezüglich einer Nachricht (M), wobei das Verfahren durch ein elektronisches Berechnungsmodul (14) durchgeführt wird und aufweist:

- das Berechnen (110) der kryptographischen Größe (S) bezüglich der Nachricht (M) mittels eines kryptographischen Algorithmus, wobei der kryptographische Algorithmus ein Algorithmus mit diskretem Logarithmus auf einer elliptischen Kurve, welche durch eine zyklische Gruppe (G) definiert ist, ist, wobei die elliptische Kurve die folgende Gleichung erfüllt:

$$y^2 = x^3 + A.x + B \quad mod \; p$$

**gekennzeichnet dadurch, dass** die zyklische Gruppe (G) eine Erweiterung des Körpers

$$\left(E\left(\mathbb{F}_{p^2}\right)\right)$$

vom Grad 2 des Körpers ($\mathbb{F}_p$) mit p = 2²⁵⁵-19 ist,

und dadurch, dass die Koeffizienten A und B jeweilig $4 = \left(-30 + \frac{140}{11}.\sqrt{2}\right)$ und $B = \left(56 - \frac{560}{11}.\sqrt{2}\right)$ erfüllen, wobei die elliptische Kurve daher die folgende Gleichung erfüllt:

$$E\left(\mathbb{F}_{p^2}\right): \quad y^2 = x^3 + \left(-30 + \frac{140}{11}.\sqrt{2}\right).x + \left(56 - \frac{560}{11}.\sqrt{2}\right) \quad mod\ p$$

.

2. Verfahren zur Berechnung gemäß dem Anspruch 1, wobei die Erweiterung

$$\left(E\left(\mathbb{F}_{p^2}\right)\right)$$

vom Grad 2 des Körpers ($\mathbb{F}_p$) durch das irreduzible Polynom $x^2 - 2$ definiert ist, wobei jedes Element der Erweiterung

$$\left(E\left(\mathbb{F}_{p^2}\right)\right)$$

sich durch die Formel ($x + a.\ y$) beschreiben lässt, worin a eine Wurzel des Polynoms ist.

3. Verfahren zur Berechnung gemäß dem Anspruch 1 oder 2, wobei die Erweiterung

$$\left(E\left(\mathbb{F}_{p^2}\right)\right)$$

vom Grad 2 des Körpers ($\mathbb{F}_p$) eine Kardinalzahl gleich 4.N aufweist, wobei N ein Primfaktor ist.

4. Verfahren zur Berechnung gemäß einem der vorhergehenden Ansprüche, wobei die elliptische Kurve einen ersten ($\psi$) und einen zweiten ($\Psi$) Endomorphismus, welche voneinander verschieden sind, besitzt, um eine GLV-Zerlegung vierter Dimension zu erlangen.

5. Verfahren zur Berechnung gemäß einem der vorhergehenden Ansprüche, wobei der erste Endomorphismus ($\psi$) die folgende Gleichung erfüllt:

$$\psi = \left[\sqrt{2}\right]: \quad (x,y) \longmapsto \left(\left(-\frac{x}{2} - \frac{C_{2,2}(70/99)}{x-4}\right)^p, \left(\frac{y}{\sqrt{-2}}\left(-\frac{1}{2} + \frac{C_{2,2}(70/99)}{(x-4)^2}\right)\right)^p\right).$$

6. Verfahren zum Verarbeiten einer Nachricht (M), wobei das Verfahren durch eine elektronische Verarbeitungsvorrichtung (10) durchgeführt wird und aufweist:

   - das Erlangen (100) der Nachricht (M),
   - das Berechnen (110) einer kryptographischen Größe (S) bezüglich der Nachricht (M) mittels eines Verfahrens zur Berechnung gemäß einem der vorhergehenden Ansprüche, und
   - das Senden (120) der berechneten kryptographischen Größe (S) an eine elektronische Empfangsvorrichtung.

7. Verfahren zum Verarbeiten einer gemäß dem Anspruch 6, wobei die berechnete kryptographische Größe (S) eine elektronische Signatur der Nachricht (M) oder die Chiffre der Nachricht (M) ist.

8. Computerprogramm, welches Softwarebefehle aufweist, welche, bei deren Ausführung durch einen Computer, ein Verfahren gemäß einem der vorhergehenden Ansprüche durchführen.

9. Elektronisches Modul (14) zum Berechnen einer kryptographischen Größe (S) bezüglich einer Nachricht (M), wobei das elektronische Modul zum Berechnen dazu eingerichtet ist, die kryptographische Größe (S) bezüglich der Nachricht (M) mittels eines kryptographischen Algorithmus zu berechnen, wobei der kryptographische Algorithmus ein Algorithmus mit diskretem Logarithmus auf einer elliptischen Kurve, welche durch eine zyklische Gruppe (G) definiert ist, ist, wobei die elliptische Kurve die folgende Gleichung erfüllt:

$$y^2 = x^3 + A.x + B \quad mod\ p$$

**gekennzeichnet dadurch, dass** die zyklische Gruppe (G) eine Erweiterung des Körpers

$$(E(\mathbb{F}_{p^2}))$$

vom Grad 2 des Körpers ($\mathbb{F}_p$) mit p = $2^{255}$-19 ist,

und dadurch, dass die Koeffizienten A und B jeweilig gleich $A = \left(-30 + \frac{140}{11}.\sqrt{2}\right)$ und $B = \left(56 - \frac{560}{11}.\sqrt{2}\right)$ sind, wobei die elliptische Kurve daher die folgende Gleichung erfüllt:

$$E(\mathbb{F}_{p^2}): \ y^2 = x^3 + \left(-30 + \frac{140}{11}.\sqrt{2}\right).x + \left(56 - \frac{560}{11}.\sqrt{2}\right) \quad mod\ p$$

.

**10.** Elektronische Vorrichtung (10) zum Verarbeiten einer Nachricht (M), wobei die Vorrichtung (10) aufweist:

- ein Erlangungsmodul (12), welches zum Erlangen der Nachricht (M) eingerichtet ist,
- ein Berechnungsmodul (14), welches zum Berechnen einer kryptographischen Größe (S) bezüglich der Nachricht (M) eingerichtet ist,
- ein Sendemodul (16), welches zum Senden der berechneten kryptographischen Größe (S) an eine elektronische Empfangsvorrichtung eingerichtet ist,
**gekennzeichnet dadurch, dass** das Berechnungsmodul (14) gemäß dem vorhergehenden Anspruch ist.

**Claims**

**1.** Method for calculating a cryptographic quantity (S) relating to a message (M), the method being implemented by an electronic calculation module (14) and comprising:

- calculation (110) of the cryptographic quantity (S) relating to the message (M) *via* a cryptographic algorithm, the cryptographic algorithm being a discrete logarithm algorithm on an elliptic curve defined over a cyclic group (G), the elliptic curve satisfying the following equation:

$$y^2 = x^3 + A.x + B \quad mod\ p$$

**characterised in that** the cyclic group (G) is a field extension

$$(E(\mathbb{F}_{p^2}))$$

of degree 2 of the field ($\mathbb{F}_p$) where p = $2^{255}$-19,

and **in that** the coefficients A and B satisfy $A = \left(-30 + \frac{140}{11}.\sqrt{2}\right)$ and $B = \left(56 - \frac{560}{11}.\sqrt{2}\right),$ respectively, the elliptic curve then satisfying the following equation:

$$E\left(\mathbb{F}_{p^2}\right): y^2 = x^3 + \left(-30 + \frac{140}{11}.\sqrt{2}\right).x + \left(56 - \frac{560}{11}.\sqrt{2}\right) \quad mod\ p.$$

2. Calculation method according to claim 1, wherein the extension

$$\left(E\left(\mathbb{F}_{p^2}\right)\right)$$

of degree 2 of the field ($\mathbb{F}_p$) is defined by the irreducible polynomial $x^2$ - 2, each element of the extension

$$\left(E\left(\mathbb{F}_{p^2}\right)\right)$$

being written in the form $x + a.\, y,$ where a is a root of said polynomial.

3. Calculation method according to claim 1 or 2, wherein the extension

$$\left(E\left(\mathbb{F}_{p^2}\right)\right)$$

of degree 2 of the field ($\mathbb{F}_p$) has a cardinal equal to 4.N, where N is a first factor.

4. Calculation method according to any one of the preceding claims, wherein the elliptic curve has first ($\psi$) and second ($\Psi$) distinct endomorphisms, for obtaining a 4-dimensional GLV decomposition.

5. Calculation method according to claim 4, wherein the first endomorphism ($\psi$) satisfies the following equation:

$$\psi = \left[\sqrt{2}\right]: (x, y) \longmapsto \left(\left(-\frac{x}{2} - \frac{c_{2,2}(70/99)}{x-4}\right)^p, \left(\frac{y}{\sqrt{-2}}\left(-\frac{1}{2} + \frac{c_{2,2}(70/99)}{(x-4)^2}\right)\right)^p\right).$$

6. Method for processing a message (M), the method being implemented by an electronic processing device (10) and comprising:

   - acquisition (100) of the message (M);
   - calculation (110) of a cryptographic quantity (S) relating to the acquired message (M) *via* a calculation method according to any one of the preceding claims; and
   - transmission (120) of the calculated cryptographic quantity (S) to an electronic receiving device.

7. Processing method according to claim 6, wherein the calculated cryptographic quantity (S) is an electronic signature of the message (M) or the encryption of the message (M).

8. Computer program comprising software instructions which, when they are executed by a computer, implement a method according to any one of the preceding claims.

9. Electronic module (14) for calculating a cryptographic quantity (S) relating to a message (M), the electronic calculation module being configured to calculate the cryptographic quantity (S) relating to the message (M) *via* a cryptographic algorithm, the cryptographic algorithm being a discrete logarithm algorithm on an elliptic curve defined over a cyclic group (G), the elliptic curve satisfying the following equation:

$$y^2 = x^3 + A.\, x + B \quad mod\ p$$

**characterised in that** the cyclic group (G) is a field extension

$$\left(E\left(\mathbb{F}_{p^2}\right)\right)$$

of degree 2 of the field ($\mathbb{F}_p$) where p = 2$^{255}$-19,

and **in that** the coefficients A and B are equal to $A = \left(-30 + \frac{140}{11}.\sqrt{2}\right)$ and $B = \left(56 - \frac{560}{11}.\sqrt{2}\right),$ respectively, the elliptic curve then satisfying the following equation:

$$E\left(\mathbb{F}_{p^2}\right): y^2 = x^3 + \left(-30 + \frac{140}{11}.\sqrt{2}\right).x + \left(56 - \frac{560}{11}.\sqrt{2}\right) \quad mod\ p.$$

**10.** Electronic device (10) for processing a message (M), the device (10) comprising:

- an acquisition module (12) configured to acquire a message (M);
- a calculation module (14) configured to calculate a cryptographic quantity (S) relating to the acquired message (M);
- a transmission module (16) configured to transmit the calculated cryptographic quantity (S) to an electronic receiving device,
**characterised in that** the calculation module (14) is in accordance with the preceding claim.

## FIG.1

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. LONGA et al.** *Efficient Techniques for High-Speed Elliptic Curve Cryptography*
- **Y. WANG et al.** *The Performance of Elliptic Curve Based Group Diffie-Hellman Protocols for Secure Group Communication over Ad Hoc Networks*
- **A. LANGLEY et al.** *Elliptic Curves for Security'', Request for Comments 7748, Internet Research Task Force (IRTF)*
- **DE GALLANT et al.** Faster point multiplication on elliptic curves with efficient endormorphisms. *21ème conférence annuelle de cryptologie internationale à Santa Barbara en Californie,* 2001